# EUROPEAN PATENT APPLICATION

(11) **EP 4 492 778 A1**
(43) Date of publication of application: **15.01.2025**
(21) Application number: 22930791.3
(22) Date of filing: 09.03.2022
(51) Int. Cl.: H04N 17/04

(54) **DISPLAY CONTROL DEVICE, DISPLAY SYSTEM, AND DISPLAY CONTROL METHOD**

(71) Applicant: Socionext Inc., Yokohama-shi Kanagawa 222-0033 (JP)
(72) Inventor: YAMAGISHI, Nobutaka, Yokohama-shi, Kanagawa 222-0033 (JP); MAIER, Martin, Yokohama-shi, Kanagawa 222-0033 (JP)
(74) Representative: Haseltine Lake Kempner LLP
(86) International application number: PCT/JP2022/010206
(87) International publication number: WO 2023/170807

(57) **Abstract**

To achieve inspection of warping processing at a low cost. A display control device includes an insertion unit configured to insert a determination image into a static region of time-series images, the static region being a region in which a pixel value does not change over time, a processing unit configured to execute warping processing on an image into which the determination image is inserted, and a determination unit configured to determine whether or not a result of a CRC computation performed on the static region of the image after the warping processing matches first reference information.

## Description

### Technical Field

The present invention relates to a display control device, a display system, and a display control method.

### Background Art

Display control devices capable of inspecting whether warping processing is appropriately executed on an image to be displayed on display devices such as head-up displays and the like are known. In each display control device, for example, a cyclic redundancy check (CRC) computation is performed on a predetermined region of the image after the warping processing.

Specifically, warping processing is independently executed using two warping engines, and inspection is performed by determining whether or not results of CRC computations performed on predetermined regions of images after the warping processing match. Alternatively, after executing warping processing, a reverse warping processing is executed by a reverse warping engine, and inspection is performed by determining whether or not a result of a CRC computation performed on a predetermined region of an image before the warping processing and a result of a CRC computation performed on a predetermined region of an image after the reverse warping processing match each other.

### Citation List

### Patent Literature

PTL 1: Japanese Laid-Open Patent Publication No. 2021-163011

### Summary of Invention

### Technical Problem

However, in a case of a display control device that performs inspection using a plurality of engines, an inspection cost increases.

According to one aspect, an object is to achieve inspection of warping processing at a low cost.

### Solution to Problem

In one aspect, a display control device has the following configuration. Specifically, the display control device includes an insertion unit, a processing unit, and a determination unit. The insertion unit is configured to insert a determination image into a static region of time-series images, the static region being a region in which a pixel value does not change over time. The processing unit is configured to execute warping processing on an image into which the determination image is inserted. The determination unit is configured to determine whether or not a result of a CRC computation performed on the static region of the image after the warping processing matches first reference information.

### Effects of Invention

Inspection of warping processing can be achieved at a low cost.

### Brief Description of Drawing

[Fig. 1] Fig. 1 is a first diagram illustrating an example of a system configuration of a display system.
[Fig. 2] Fig. 2 is a first diagram illustrating an example of a hardware configuration of a display controller.
[Fig. 3] Fig. 3 is a first diagram illustrating an example of a functional configuration of the display controller.
[Fig. 4] Fig. 4 is a diagram illustrating a concrete example of a static region.
[Fig. 5] Fig. 5 is a diagram illustrating a concrete example of processing by a watermark image insertion unit.
[Fig. 6] Fig. 6 is a diagram illustrating a concrete example of processing by a warping unit.
[Fig. 7] Fig. 7 is a diagram illustrating a concrete example of processing by an inspection unit and a removal unit.
[Fig. 8] Fig. 8 is a diagram illustrating a concrete example of processing by the inspection unit.
[Fig. 9] Fig. 9 is an example of a first flowchart illustrating a flow of inspection processing.
[Fig. 10] Fig. 10 is an example of a second flowchart illustrating a flow of the inspection processing.
[Fig. 11] Fig. 11 is a second diagram illustrating an example of a system configuration of the display system.
[Fig. 12] Fig. 12 is a second diagram illustrating an example of a hardware configuration of the display controller.
[Fig. 13] Fig. 13 is a second diagram illustrating an example of a functional configuration of the display controller.
[Fig. 14] Fig. 14 is an example of a third flowchart illustrating a flow of the inspection processing.

### Description of Embodiments

Each of embodiments will be described with reference to the accompanying drawings hereinafter. In the present specification and drawings, constituent elements having the substantially same functional configuration are denoted by the same reference numerals, and redundant description thereof will be omitted.

### [First embodiment] <System configuration of display system>

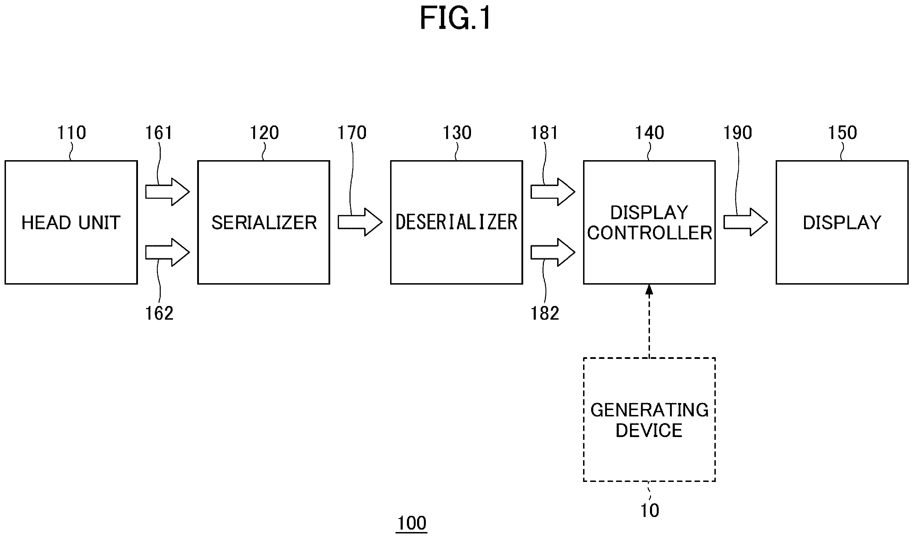

First, a system configuration of a display system, which executes warping processing and is mounted in a vehicle, will be described. Fig. 1 is a first diagram illustrating an example of the system configuration of the display system. As illustrated in Fig. 1, the display system 100 includes a head unit 110, a serializer 120, a deserializer 130, a display controller 140, and a display 150.

The head unit 110 generates time-series images to be displayed on the display 150. Moreover, the head unit 110 outputs time-series images and control information (information used for control performed at the time when time-series images are sequentially displayed on the display 150) to the serializer 120 (see the reference numerals 161 and 162).

The serializer 120 is a circuit configured to serialize signals of the time-series images and control information output by the head unit 110 to a single transmission line (video link). The serializer 120 transmits the serialized signals to the deserializer 130 via the video link (e.g., Low Voltage Differential Signaling (LVDS), APIX (registered trademark), etc.) (see reference numeral 170).

The deserializer 130 is a circuit configured to parallelize the serialized signals transmitted via the video link. The deserializer 130 outputs the time-series images and control information obtained by parallelization to the display controller 140 (see reference numerals 181 and 182).

The display controller 140 is one example of the display control device, and is configured to execute warping processing on each of time-series images to be displayed on the display 150 to control each of the images after the warping processing to be displayed on the display 150 based on the control information.

Moreover, the display controller 140 inserts a watermark image (one example of the determination image) into a static region of an image before executing warping processing. The display controller 140 then performs a CRC computation on the static region of the image after the warping processing to inspect whether or not the warping processing has been appropriately performed. The static region is a region in which a pixel value does not change over time within imaging regions of time-series images (details will be described below).

In the present embodiment, for example, a generating device 10 is coupled to the display controller 140 before the display system 100 is mounted in a vehicle. Owing to the configuration mentioned, reference information (referred to as "reference CRC") generated in advance by the generating device 10 is stored in the display controller 140. The reference CRC is information predetermined by, when a watermark image (one example of the determination image) is inserted into a static region and warping processing is executed, performing a CRC computation on the image in the static region after the warping processing.

The display controller 140 compares a result of the CRC computation with a pre-stored reference CRC. The result of the CRC computation is obtained by executing the warping processing onto an image in which a watermark image is inserted into a static region of the image, and performing the CRC computation on the static region of the image after the warping processing. Therefore, the display controller 140 can inspect whether or not the warping processing has been appropriately executed. Note that, the reference CRC includes, as part of the reference CRC, target region information of the CRC computation. The target region information of the CRC computation designates which range of a region within the static region of the image after the warping processing will be a target of the CRC computation. The target region of the CRC computation is set so as to include the region of the watermark image after the warping processing. The display controller 140 performs a CRC computation on the static region, into which the watermark image is inserted, based on the target region information.

The display 150 is one example of a display device. For example, the display 150 includes a head-up display (HUD) or the like, and displays an image after warping processing under the control of the display controller 140.

### <Hardware configuration of display controller>

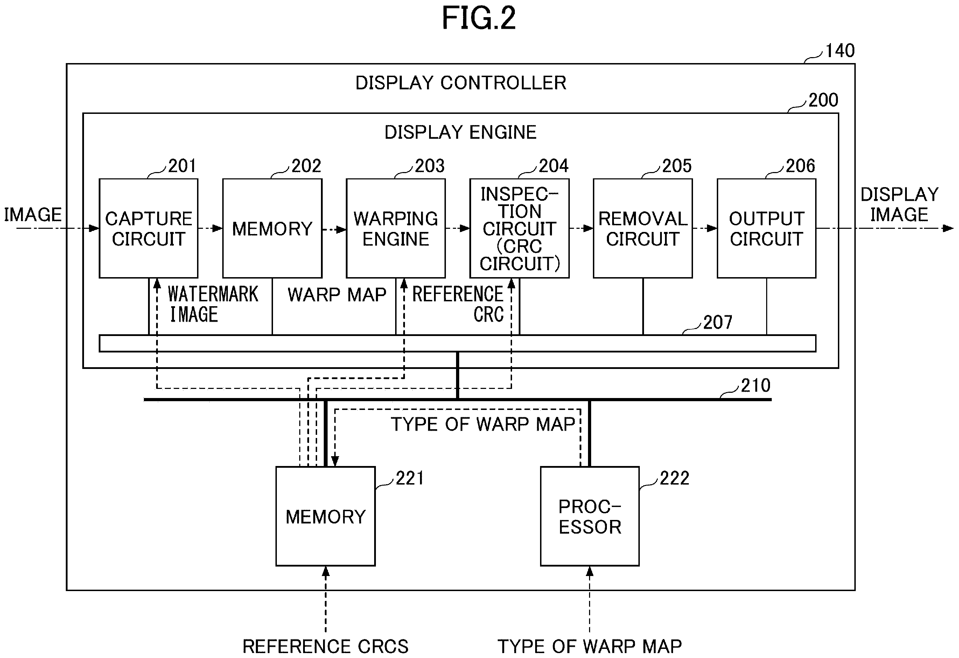

Next, a hardware configuration of the display controller 140 will be described. Fig. 2 is a first diagram illustrating one example of a hardware configuration of the display controller. As illustrated in Fig. 2, the display controller 140 includes a display engine 200, a memory 221, and a processor 222. The display engine 200, the memory 221, and the processor 222 are coupled to one another via a bus 210.

The display engine 200 includes hardware for executing processing to acquire the time-series images transmitted from the deserializer 130, processing to insert a watermark image, warping processing, inspection processing, removal processing, processing to output a display image to the display 150, and the like. Note that, the hardware included in the display engine 200 executes display control processing to display an image after warping processing on the display 150 based on the control information transmitted by the deserializer 130, but description of the display control processing will be omitted in the following description.

As illustrated in Fig. 2, the display engine 200 includes a capture circuit 201, a memory 202, a warping engine 203, an inspection circuit 204, a removal circuit 205, and an output circuit 206. The elements (the capture circuit 201 to the output circuit 206) inside the display engine 200 are coupled to one another via a predetermined interface 207 (e.g., a register interface).

The time-series images transmitted from the deserializer 130 are each sequentially subjected to the above processing (from the processing to acquire to the processing to output) by respective elements inside the display engine 200 to be output as display images (see dash-dotted lines).

The memory 221 stores a variety of data used when the display engine 200 executes the warping processing and the inspection processing. In the present embodiment, the memory 221 stores a watermark image to be inserted into a static region of an image, and a plurality of warp maps used when the warping processing is executed. Moreover, the memory 221 stores a plurality of reference CRCs (which may include a plurality of reference CRCs (for inspection) and a reference CRC (for removal), and detail of which will be described below), which have been generated by the generating device 10 in advance before the display system 100 is mounted in a vehicle. The plurality of reference CRCs are used for the inspection processing.

The processor 222 controls the warping processing and inspection processing executed by the display engine 200. Specifically, the processor 222 acquires a type of a warp map used for the warping processing, and writes the acquired type of the warp map in the memory 221. The warping engine 203 loads a warp map corresponding to the written type of the warp map among a plurality of warp maps pre-stored in the memory 221 to execute the warping processing. Moreover, the inspection circuit 204 loads a reference CRC corresponding to the written type of the warp map from the memory 221 to execute the inspection processing. Specifically, the processor 222 controls to switch processing content of the warping processing and processing content of the inspection processing executed by the display engine 200 according to a type of a warp map.

### <Functional configuration of display controller>

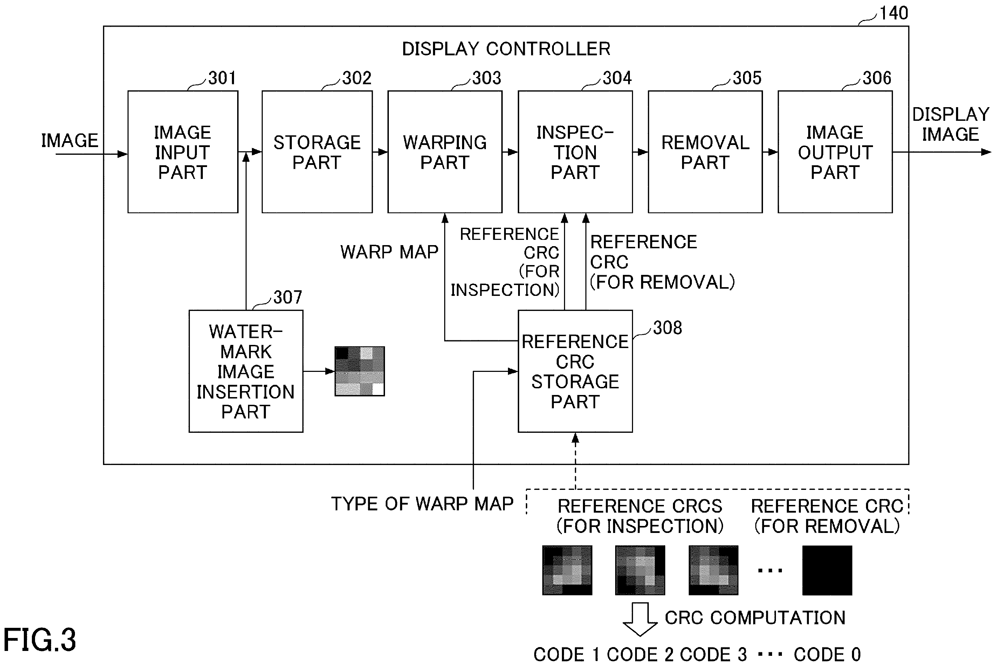

Next, a functional configuration of the display controller 140 will be described. Fig. 3 is a first diagram illustrating one example of a functional configuration of the display controller. As the elements included in the hardware configuration of Fig. 2 are actuated, the display controller 140 functions as:
an image input unit 301;
a storage unit 302;
a warping unit 303;
an inspection unit 304;
a removal unit 305;
an image output unit 306;
a watermark image insertion unit 307; and
a reference CRC storage unit 308.

Among them, the image input unit 301 is realized by the capture circuit 201, and sequentially acquires time-series images from the deserializer 130.

The watermark image insertion unit 307 is one example of the insertion unit, and is realized by the capture circuit 201. The watermark image insertion unit 307 inserts a watermark image loaded from the memory 221 into a static region of the acquired time-series images.

The storage unit 302 is realized by the memory 202, and sequentially stores the images in each of which the watermark image is inserted into the static region by the watermark image insertion unit 307.

The warping unit 303 is one example of a processing unit and is realized by the warping engine 203. The warping unit 303 sequentially loads the images stored in the storage unit 302 to execute the warping processing. The warping unit 303 loads a warp map corresponding to the designated type of a warp map from the memory 221 functioning as the reference CRC storage unit 308 to execute the warping processing, and notifies the images after the warping processing to the inspection unit 304.

The inspection unit 304 is one example of the determination unit, and is realized by the inspection circuit 204. The inspection unit 304 performs a CRC computation on the static region of the image after the warping processing and acquires a result of the CRC computation.

Moreover, the inspection unit 304 loads a reference CRC (for inspection) (one example of the first reference information) corresponding to the designated type of the warp map from the memory 221 functioning as the reference CRC storage unit 308 (one example of a storage unit). Moreover, the inspection unit 304 compares the result of the CRC computation and the loaded reference CRC (for inspection) to determine whether or not the result of the CRC computation and the loaded reference CRC (for inspection) match each other.

As illustrated in Fig. 3, the reference CRC storage unit 308 pre-stores a plurality of reference CRCs (for inspection) corresponding to types of warp maps. The plurality of reference CRCs (for inspection) are different from one another according to the types of the warp maps, respectively. Specifically, results of CRC computations each obtained when the generating device 10:
inserts a watermark image into a static region;
executes warping processing on the static region into which the watermark image is inserted using a respective warp map; and
performs a CRC computation on the static region of the image after the warping processing,
are stored as the reference CRCs (for inspection). The example of Fig. 3 illustrates a state where code 1, code 2, etc., are stored as the reference CRCs (for inspection).

Moreover, the reference CRC storage unit 308 also pre-stores a reference CRC (for removal) (one example of second reference information) for removing the inserted watermark image. Specifically, a result of a CRC computation obtained when the generating device 10:
executes warping processing, for example, using a predetermined warp map without inserting a watermark image into a static region; and
performs a CRC computation on the static region of the image after the warping processing,
is stored as the reference CRC (for removal). The example of Fig. 3 illustrates a state where code 0 is stored as the reference CRC (for removal).

When the result of the CRC computation performed on the static region of the image after the warping image matches the reference CRC (for inspection), the inspection unit 304 determines that the warping processing has been appropriately executed by the warping engine 203. In this case, the inspection unit 304 notifies the image after the warping processing to the removal unit 305. Moreover, when the result of the CRC computation performed on the static region of the image after the warping processing does not match the reference CRC (for inspection), the inspection unit 304 determines that the warping processing has not been appropriately executed by the warping engine 203. In this case, the inspection unit 304 performs error processing, and notifies an image after the error processing to the image output unit 306.

Here, the image after the error processing is, for example, a static image in which at least part of a dynamic region is converted into black etc., within the image after the warping processing, and is an image for reporting a viewer of the display 150 that the warping processing has not been appropriately executed.

Note that, the dynamic region encompasses a region in which a pixel value changes over time within imaging regions of the time-series images. Specifically, the imaging region includes the dynamic region and the static region.

Moreover, in the present embodiment, a function of converting the designated region that is at least part of the imaging region including the dynamic region and the static region into black as the error processing is referred to as a "black display function." The inspection unit 304 is also one example of a black conversion unit configured to convert the designated region that is at least part of the dynamic region into black using the black display function.

The removal unit 305 is one example of the changing unit, and is realized by the removal circuit 205. The removal unit 305 performs removal processing on the static region into which the watermark image is inserted within the image after the warping processing notified by the inspection unit 304 to return the static region back to a state where the watermark image is not inserted. The removal processing is processing to remove the watermark image after the warping processing. Note that, the state where the watermark image is not inserted encompasses a state where warping processing is executed without inserting the watermark image into the static region.

Moreover, the removal unit 305 notifies the image from which the watermark image of the static region after the warping processing is removed to the image output unit 306.

The image output unit 306 is one example of the output unit, and is realized by the output circuit 206. The image output unit 306 transmits the image notified from the removal unit 305 to the display 150. Note that, in a case where error processing is performed by the inspection unit 304, the image output unit 306 transmits the image after the error processing to the display 150.

In the above description, it is described that the removal unit 305 performs removal processing, which removes the watermark image after the warping processing, on the static region to return the static region back to a state where the watermark image is not inserted.

However, an embodiment of returning the static region to the state where the watermark image is not inserted is not limited to the above. For example, in a case where the result of the CRC computation and the reference CRC (for inspection) match each other, the inspection unit 304 further loads the reference CRC (for removal) from the memory 221 functioning as the reference CRC storage unit 308, and compares the result of the CRC computation with the reference CRC (for removal). Here, as the reference CRC (for removal) to be loaded, a code that does not match the result of the CRC computation is intentionally selected to implement the black conversion function.

In this case, the inspection unit 304 determines that the result of the CRC computation performed on the static region of the image after the warping processing does not match the reference CRC (for removal), thus the above black display function is implemented. At this point, a target on which the black display function is implemented is limited to the static region into which the watermark image is inserted so that the static region into which the watermark image is inserted is converted into black. Specifically, when the state of the static region into which the watermark image is not inserted is black, the inspection unit 304 implements the black display function so that the static region is returned to the state of the static region into which the watermark image is not inserted. The inspection unit 304 is one example of the changing unit, and includes a black conversion unit that converts the designated region that is at least part of the static region into black using the black display function.

As described above, the static region can be returned back to the state where the watermark image is not inserted using the black display function without actuating the removal unit 305.

### <Concrete example of static region>

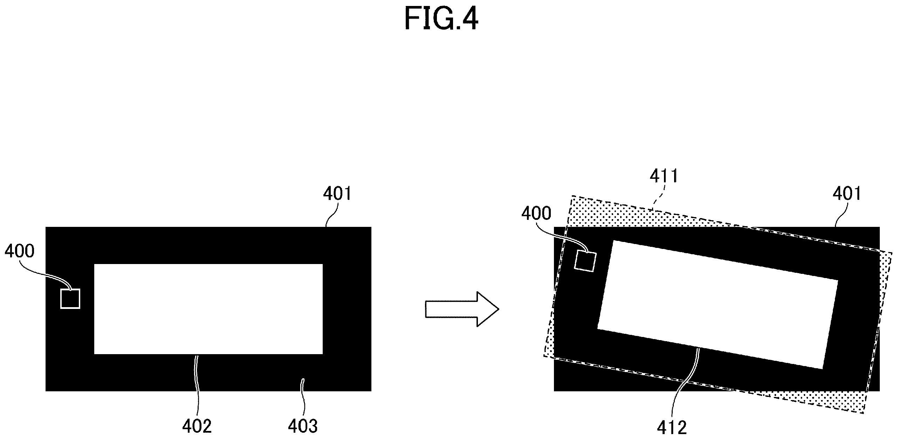

Next, a concrete example of the static region will be described. As described above, the static region encompasses a region in which a pixel value does not change over time within time-series images. Fig. 4 is a diagram illustrating a concrete example of the static region. In Fig. 4, the reference numeral 401 is one example of a one-frame image among the time-series images acquired by the image input unit 301. As illustrated in Fig. 4, a black region 403 is provided at the periphery of the dynamic region 402 in each of the time-series images acquired by the image input unit 301 so that the dynamic region 402 does not extend beyond a displaying region of the display 150 even when the warping processing is executed.

Moreover, in Fig. 4, the reference numeral 411 denotes one example of an image (an image of a subsequent frame) sequentially acquired by the image input unit 301 following the image indicated with the reference numeral 401. As illustrated in Fig. 4, the dynamic region 402 is shifted to the dynamic region 412 in the image indicated with the reference numeral 411. At this shifting, the region indicated with the reference numeral 400 in the black region 403 is also included in the black region within the image indicated with the reference numeral 411. In the manner as described above, the image acquired by the image input unit 301 includes the region in which the pixel value does not change over time even when a frame of the image is switched, and the above region is used as a static region in the present embodiment. Specifically, in the example of Fig. 4, the static region is a black region disposed at a periphery of the dynamic region.

Although it is described in the example of Fig. 4 that the black region disposed at the periphery of the dynamic region is used as the static region, a region other than the black region disposed at the periphery of the dynamic region may be used as a static region. For example, if there is a region, in which a pixel value does not change over time, is present within a region inside the dynamic region, such a region may be used as the static region.

Moreover, although the case where the black region is used as the static region is described in the example of Fig. 4, a color of the static region is not limited to black. The static region may be a region of another color, as long as a pixel value does not change over time. Moreover, a region used as the static region is not limited to a region of a single color, and may be a region of multiple colors as long as the static region is a region in which a pixel value does not change over time.

### <Concrete example of processing by watermark image insertion unit>

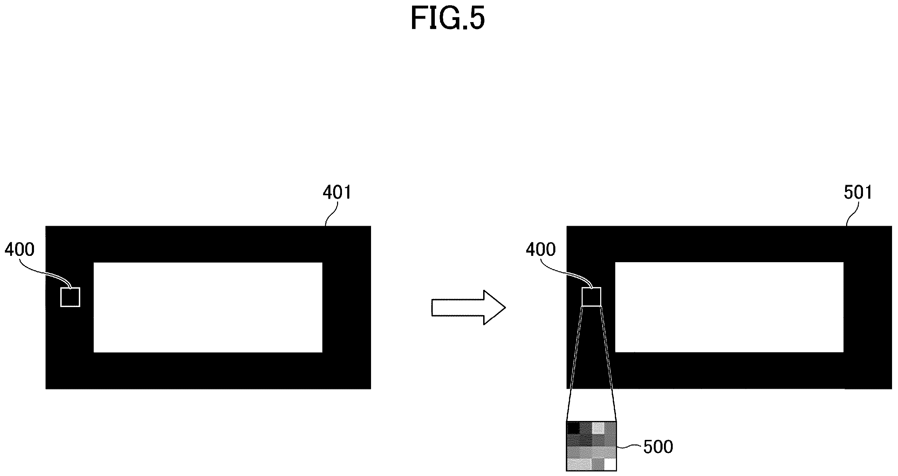

Next, a concrete example of processing by the watermark image insertion unit 307 will be described. Fig. 5 is a diagram illustrating a concrete example of processing by the watermark image insertion unit. In Fig. 5, the reference numeral 401 denotes one example of a one-frame image among the time-series images acquired by the image input unit 301, and the reference numeral 400 denotes a static region. As illustrated in Fig. 5, the watermark image insertion unit 307 inserts a watermark image 500 into a static region indicated with the reference numeral 400 within the image indicated with the reference numeral 401. Note that, the image 501 in which the watermark image 500 is inserted into the static region is stored in the storage unit 302.

### <Concrete example of processing by warping unit>

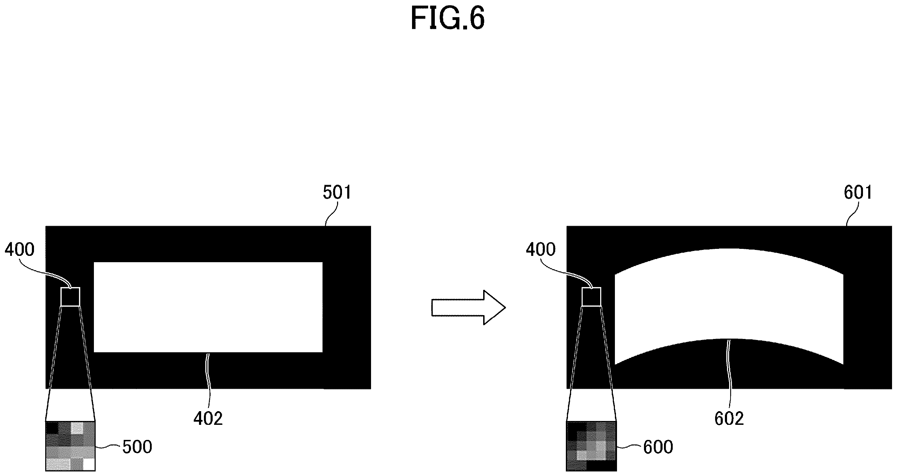

Next, a concrete example of processing (warping processing) of the warping unit 303 will be described. Fig. 6 is a diagram illustrating a concrete example of processing by the warping unit. As illustrated in Fig. 6, the warping unit 303 loads the image 501 in which the watermark image 500 is inserted into the static region from the storage unit 302 and also loads a warp map corresponding to a type of a warp map from the memory 221 to execute the warping processing.

In Fig. 6, the reference numeral 601 denotes an image after warping processing. As illustrated in Fig. 6, as the warping processing is executed, the dynamic region 402 is deformed within the image 501 in which the watermark image 500 is inserted into the static region. The reference numeral 602 denotes the dynamic region deformed by executing the warping processing. Moreover, within the image 501, a pixel value of the watermark image 500 in the static region indicated with the reference numeral 400 is changed by executing the warping processing. The reference numeral 600 denotes the watermark image after deformation, where the pixel value of the watermark image after deformation is changed by executing the warping processing.

### <Concrete example of processing by inspection unit and removal unit>

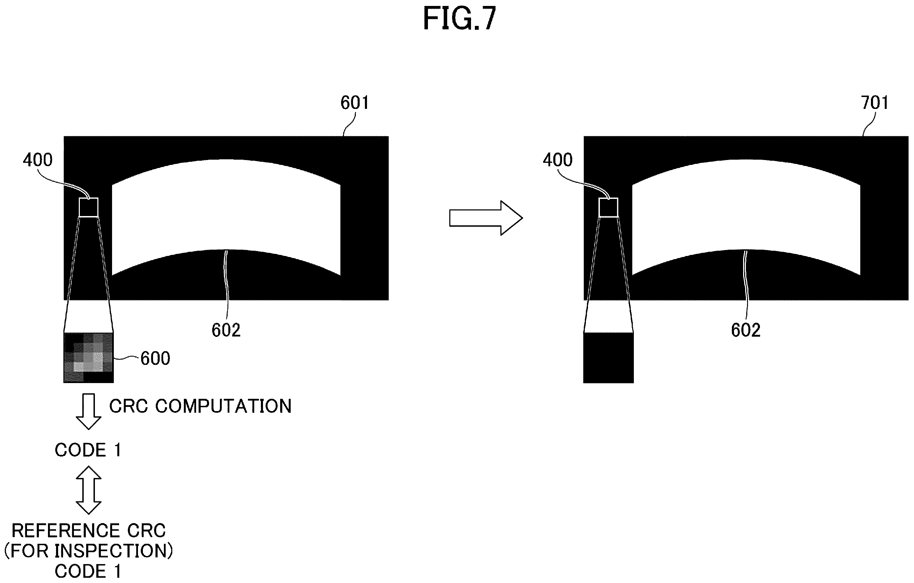

Next, a concrete example of processing by the inspection unit 304 (inspection processing) and processing by the removal unit 305 (removal processing) will be described. Fig. 7 is a diagram illustrating a concrete example of processing by the inspection unit and the removal unit.

In Fig. 7, a reference numeral 601 denotes an image after warping processing. As illustrated in Fig. 7, the inspection unit 304 performs a CRC computation on a static region (reference numeral 600) of the image after the warping processing to acquire a result of the CRC computation ("code 1" in the example of Fig. 7). Moreover, the inspection unit 304 loads a reference CRC (for inspection) ("code 1" in the example of Fig. 7) corresponding to a type of a warp map to compare with the result of the CRC computation ("code 1" in the example of Fig. 7).

In the case of the example of Fig. 7, the result of the CRC computation and the reference CRC (for inspection) match each other, thus the inspection unit 304 determines that the warping processing has been appropriately executed by the warping engine 203. Thus, the inspection unit 304 notifies the image after the warping processing (reference numeral 601) to the removal unit 305.

In Fig. 7, the reference numeral 701 denotes a state where the removal unit 305 removes the watermark image after the warping processing (reference numeral 600) in the static region that includes the watermark image after the warping processing (reference numeral 600) within the image after the warping processing (reference numeral 601).

As illustrated in Fig. 7, the removal unit 305 performs the removal processing so that the static region indicated with the reference numeral 400 is returned back to the state where the watermark image is not inserted.

As described above, the above black display function may be implemented by, without actuating the removal unit 305, further loading a reference CRC (for removal) from the memory 221, and comparing the result of the CRC computation and the reference CRC (for removal) by the inspection unit 304, as described above. Here, as the reference CRC (for removal) to be loaded, a code that does not match the result of the CRC computation is intentionally selected to implement the black converting function. Thus, the inspection unit 304 can convert the static region into which the watermark image is inserted into black to return the static region indicated with reference numeral 400 back to the state where the watermark image is not inserted.

### <Concrete example of processing by inspection unit>

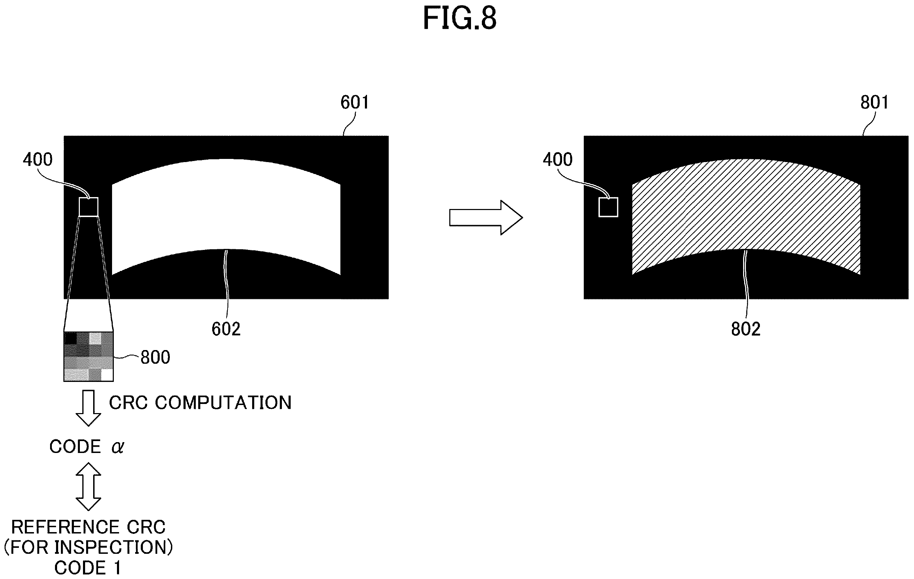

Next, a concrete example of processing (inspection processing and error processing) by the inspection unit 304 will be described. Fig. 8 is a diagram illustrating a concrete example of processing by the inspection unit.

In Fig. 8, the reference numeral 601 denotes an image after warping processing. As illustrated in Fig. 8, the inspection unit 304 performs a CRC computation on a static region (reference numeral 800) of the image after the warping processing to acquire a result of the CRC computation ("code α" in the example of Fig. 8). Moreover, the inspection unit 304 loads a reference CRC (for inspection) ("code 1" in the example of Fig. 8) corresponding to a type of a warp map to compare with the result of the CRC computation ("code α" in the example of Fig. 8).

In the case of the example of Fig. 8, as the result of the CRC computation and the reference CRC (for inspection) do not match each other, the inspection unit 304 determines that the warping processing has not been appropriately executed by the warping engine 203.

In this case, the inspection unit 304 performs error processing. In Fig. 8, the reference numeral 801 denotes an image after the error processing, where the error processing has been performed on the image by the inspection unit 304. As illustrated in Fig. 8, in the image after the error processing, the dynamic region indicated with the reference numeral 602 and the static region indicated with the reference numeral 400 are converted into black (see the reference numeral 400 and the reference numeral 802, note that the dynamic region indicated with the reference numeral 802 is indicated with diagonal lines for convenience). Thus, a viewer of the display 150 can recognize that the warping processing has not been appropriately executed.

Note that, the entire dynamic region indicated with the reference numeral 602 is converted into black in the example of Fig. 8, but the embodiment is not limited to this. At least part of the region of the dynamic region indicated with the reference numeral 602 may be converted into black, as long as a viewer of the display 150 can recognize that the warping processing has not been appropriately executed.

### <Flow of inspection processing>

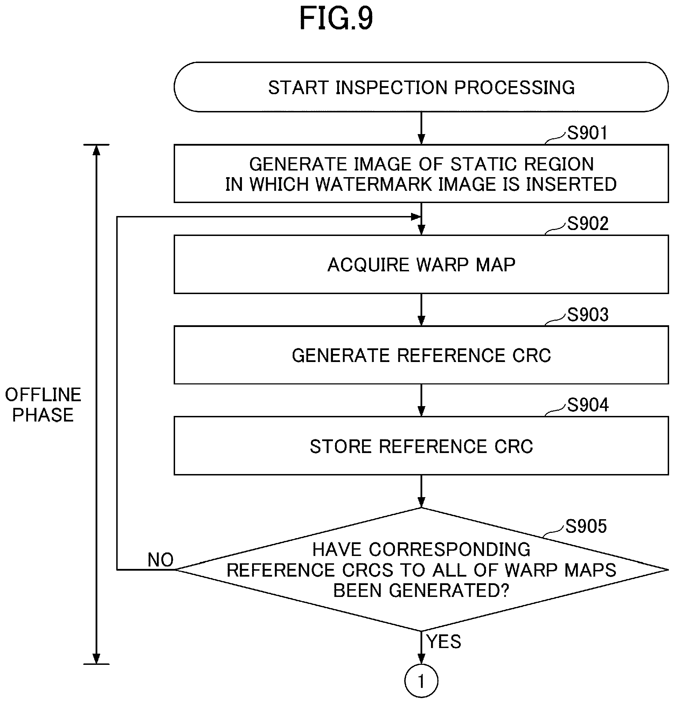

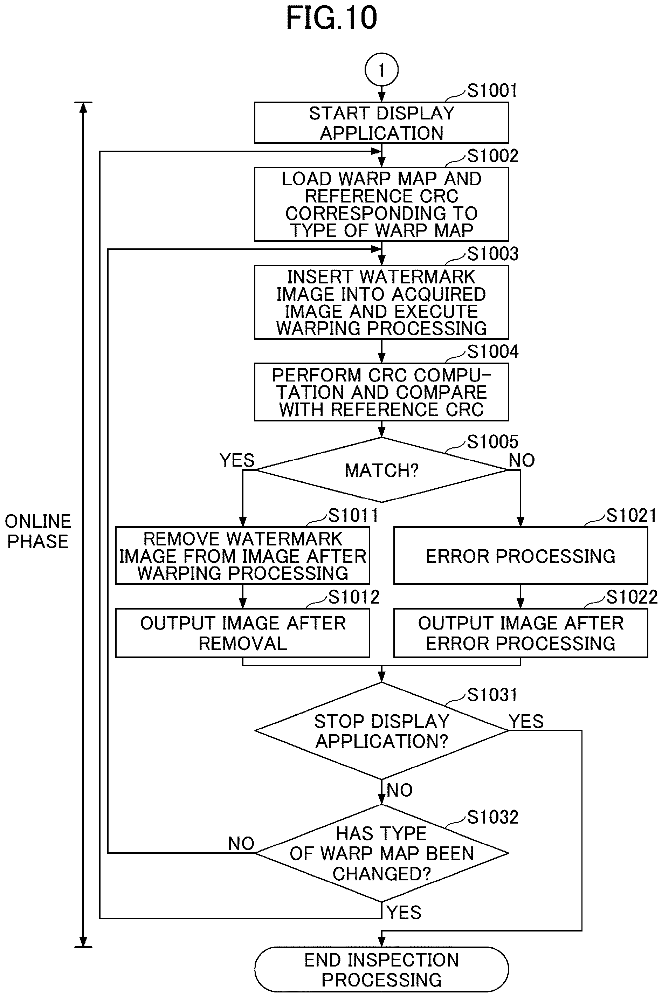

Next, a flow of the inspection processing in the display system 100 will be described with reference to Fig. 9 and Fig. 10. Fig. 9 and Fig. 10 are examples of first and second flow charts illustrating a flow of the inspection processing.

As illustrated in Fig. 9 and Fig. 10, the inspection processing by the display system 100 includes an online phase and an offline phase, and the display system 100 executes the offline phase (steps S901 to S905) first.

At the step S901, the generating device 10 extracts a static region from an image that is a processing target of warping processing and inserts a watermark image to generate an image of the static region where the watermark image is inserted.

At the step S902, the generating device 10 acquires one warp map among a plurality of warp maps to be used for the warping processing.

At the step S903, the generating device 10 executes warping processing on the generated image of the static region using the acquired warp map, and performs a CRC computation on the image of the static region after the warping processing to generate a reference CRC. At the time of the generation of the reference CRC, the generating device 10 may generate a reference CRC (for removal) in addition to the reference CRC (for inspection).

At the step S904, the generating device 10 stores the generated reference CRC in a memory 221 of a display controller 140.

At the step S905, the generating device 10 determines whether or not corresponding reference CRCs have been generated to all of the plurality of warp maps. When there is a warp map for which a corresponding reference CRC has not been generated at the step S905 (in the case of No at the step S905), the process is returned to the step S902.

When it is determined that corresponding reference CRCs are generated to all of the plurality of warp maps at the step S905 (in the case of YES at the step S905), in contrast to the above, the process proceeds to Fig. 10, and moves onto the online phase (steps S1001 to S1032).

At the step S1001, the display controller 140 acquires an instruction to start a display application. Thus, the display engine 200 is actuated to start the display application for displaying an image on the display 150.

At the step S1002, the warping unit 303 loads a warp map corresponding to the type of the warp map. Moreover, the inspection unit 304 loads a reference CRC (for inspection) corresponding to the type of the warp map.

At the step S1003, the watermark image insertion unit 307 inserts a watermark image into a static region of the image acquired by the image input unit 301. Moreover, the warping unit 303 executes warping processing on the image in which the watermark image is inserted into the static region using the warp map corresponding to the type of the warp map.

At the step S1004, the inspection unit 304 performs a CRC computation on the static region of the image after the warping processing, and compares the result of the CRC computation and the reference CRC (for inspection).

At the step S1005, the inspection unit 304 determines, as a result of the comparison, whether or not the result of the CRC computation and the reference CRC (for inspection) match each other. When it is determined that the result of the CRC computation and the reference CRC (for inspection) match at the step S1005 (in the case of YES at the step S1005), the process proceeds to the step S1011.

At the step S1011, the removal unit 305 removes the watermark image after the warping processing from the static region of the image after the warping processing to return the static region of the image after the warping processing back to the state where the watermark image is not inserted.

At the step S1012, the image output unit 306 outputs the image after the removal, in which the watermark image after the warping processing has been removed from the static region of the image after the warping processing, to the display 150.

When it is determined that the result of the CRC computation and the reference CRC (for inspection) do not match at the step S1005 (in the case of NO at the step S1005), in contrast to the above, the process proceeds to the step S1021.

At the step S1021, the inspection unit 304 performs error processing. Moreover, at the step S1022, the image output unit 306 outputs the image after the error processing to the display 150.

At the step S1031, the display controller 140 determines whether or not an instruction to stop the display application has been acquired. When it was determined that the display controller 140 has not acquired the instruction to stop at the step S1031 (in the case of NO at the step S1031), the process proceeds to the step S1032.

At the step S1032, the warping unit 303 and the inspection unit 304 determine whether or not the type of the warp map has been changed. When it is determined that the type of the warp map has not been changed at the step S1032 (in the case of NO at the step S1032), the process is returned to the step S1003.

When it is determined that the type of the warp map has been changed at the step S1032 (in the case of YES at the step S1032), in contrast to the above, the process is returned to the step S1002.

Moreover, when it is determined that the instruction to stop has been acquired at the step S1031 (in a case of YES at the step S1031), the display engine 200 is stopped and the display application for performing an image display on the display 150 is ended. As a result, the inspection processing is ended.

### <Conclusion>

As is clear from the above description, the display controller 140 according to the first embodiment is configured to:
insert a watermark image, which is a determination image, into a static region of time-series images, where the static region is a region in which a pixel value does not change over time;
execute warping processing on an image in which the watermark image is inserted into the static region; and
determine whether or not a result of a CRC computation performed on the static region of the image after the warping processing matches a reference CRC generated in advance.

As described above, in the first embodiment, it is configured that the watermark image is inserted into the static region in which a pixel value does not change over time, and a reference CRC is prepared in advance, focusing on the fact that the watermark image after the warping processing becomes an unchanged image.

Thus, according to the first embodiment, it is not necessary to perform an inspection of the warping processing using a plurality of engines so that the inspection of the warping processing can be achieved at a low cost.

### [Second embodiment]

In the first embodiment, the case, in which the generating device 10 generates a plurality of reference CRCs according to types of warp maps in advance in the offline phase, and the plurality of reference CRCs generated are stored in the storage unit 308, has been described.

In contrast, in the second embodiment, a case, in which a reference CRC generating unit is disposed in the display controller 140, and reference CRCs are generated in the online phase, will be described. Hereinafter, the second embodiment will be described mainly through differences with the first embodiment.

### <System configuration of display system>

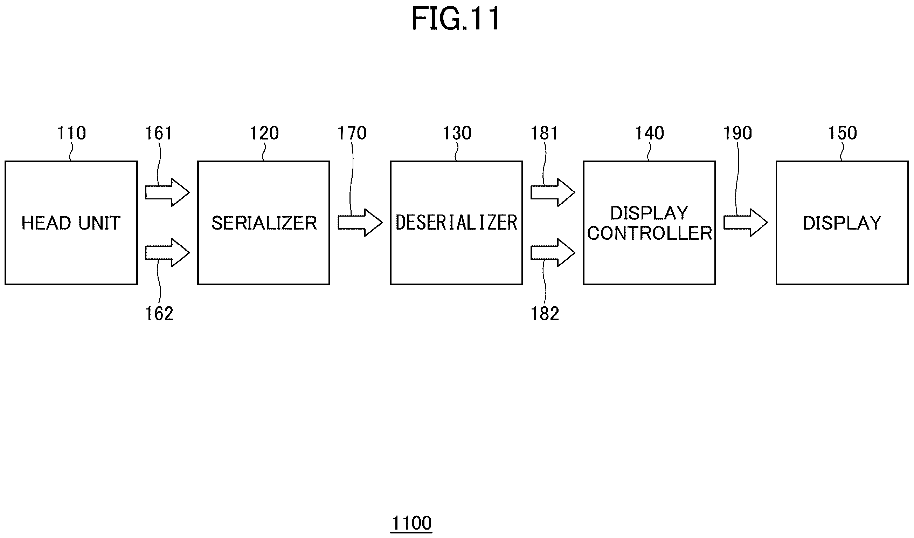

First, a system configuration of the display system according to the second embodiment will be described. Fig. 11 is a second diagram illustrating one example of a system configuration of the display system. The difference with the display system 100 illustrated in Fig. 1 is such that the display system 1100 illustrated in Fig. 11 does not include the generating device 10. As described above, in the second embodiment, reference CRCs are generated in the online phase, thus the display system 1100 does not include the generating device 10 for generating references CRC.

### <Hardware configuration of display controller>

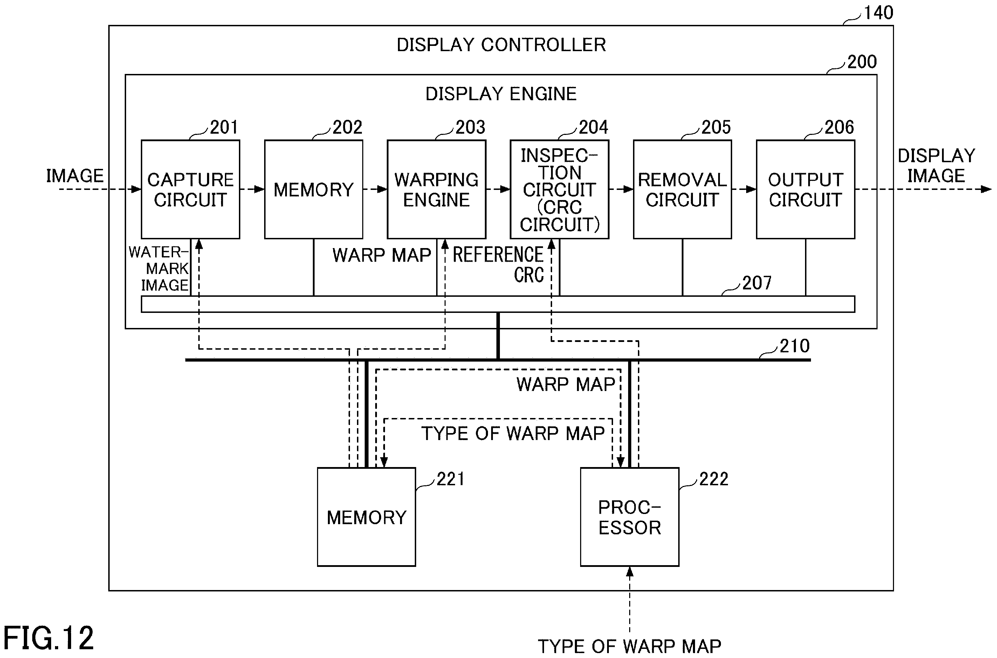

Next, a hardware configuration of the display controller 140 according to the second embodiment will be described. Fig. 12 is a second diagram illustrating one example of a hardware configuration of the display controller. The hardware configuration illustrated in Fig. 2 and the hardware configuration illustrated in Fig. 12 have the same constituent elements, and are different only in the flow of the data.

As illustrated in Fig. 12, once the processor 222 acquires a type of a warp map used for the warping processing, the processor 222 loads the acquired type of the warp map from the memory 221, and generates a reference CRC corresponding to the acquired type of the warp map. Moreover, the processor 222 notifies the generated reference CRC to the inspection circuit 204. Note that, other processing performed by the processor 222 is already described in the first embodiment, thus the description thereof will be omitted here.

### <Functional configuration of display controller>

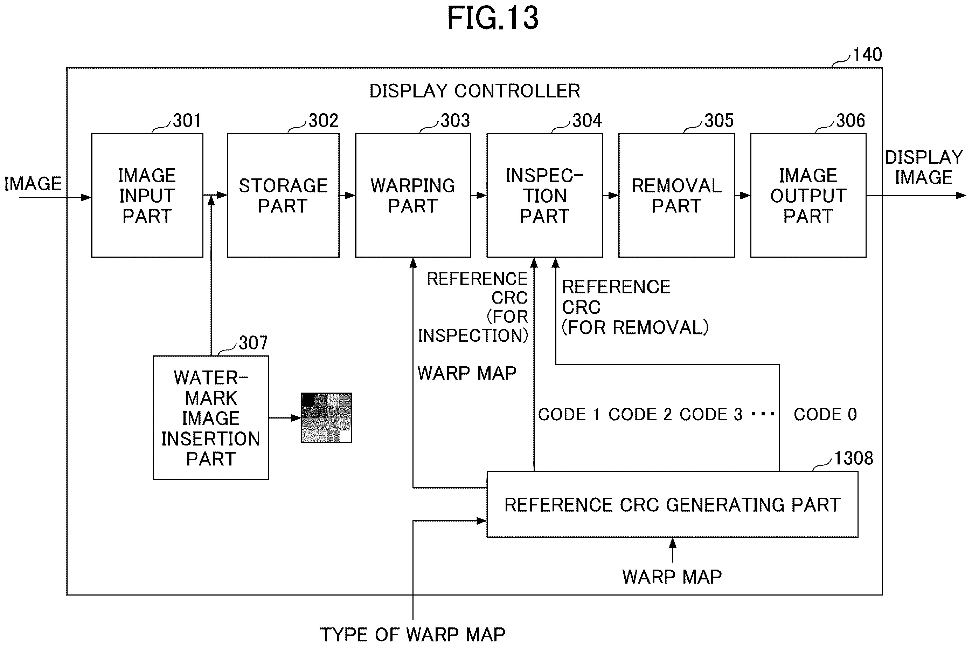

Next, a functional configuration of the display controller 140 according to the second embodiment will be described. Fig. 13 is a second diagram illustrating one example of the functional configuration of the display controller. The difference with the functional configuration described with reference to Fig. 3 is such that the display controller 140 illustrated in Fig. 13 includes a reference CRC generating unit 1308 instead of the reference CRC storage unit 308.

The reference CRC generating unit 1308 is one example of the generating unit. The reference CRC generating unit 1308 is realized by the processor 222, and once the reference CRC generating unit 1308 acquires a type of a warp map, the reference CRC generating unit 1308 loads the acquired type of the warp map from the memory 221. Moreover, the reference CRC generating unit 1308 executes warping processing on an image in a static region into which a watermark image is inserted and which is prepared in advance using the loaded warp map, and performs a CRC computation on the image of the static region after the warping processing. Thus, the reference CRC generating unit 1308 generates a reference CRC (for inspection) corresponding to the acquired type of the warp map to notify the generated reference CRC (for inspection) to the inspection unit 304.

In a case where a black display function is used for returning to the state where the watermark image is not inserted, similar to the first embodiment, the reference CRC generating unit 1308 may be configured to further generate a reference CRC (for removal).

### <Flow of inspection processing>

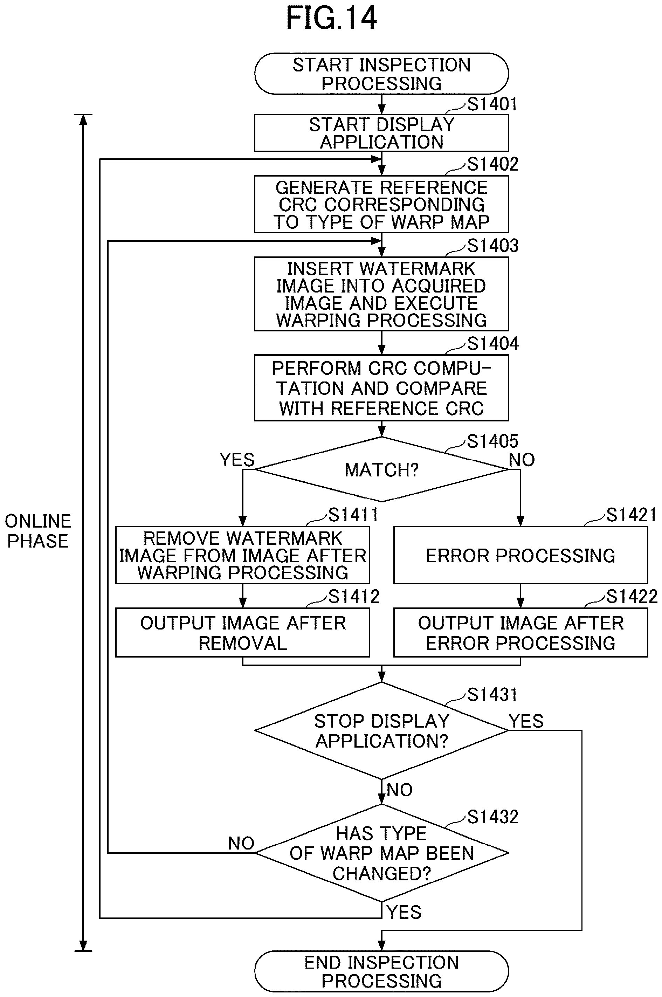

Next, a flow of inspection processing by the display system 1100 will be described with reference to Fig. 14. Fig. 14 is one example of a third flowchart illustrating a flow of the inspection processing. As illustrated in Fig. 14, the inspection processing by the display system 1100 includes only an online phase (steps S1401 to S1432).

At the step S1401, the display controller 140 acquires an instruction to start a display application. Thus, the display engine 200 is actuated to start the display application for displaying an image on a display 150.

At the step S1402, the reference CRC generating unit 1308 generates a reference CRC (for inspection) corresponding to the type of the warp map, and notifies the generated reference CRC (for inspection) to the inspection unit 304.

At the step S1403, the watermark image insertion unit 307 inserts a watermark image into a static region of the image acquired by the image input unit 301. Moreover, the warping unit 303 executes warping processing on the image in which the watermark image is inserted into the static region using the warp map corresponding to the type of the warp map.

At the step S1404, the inspection unit 304 performs a CRC computation on the static region of the image after the warping processing, and compares the result of the CRC computation and the reference CRC (for inspection) generated at the step S1402.

At the step S1405, the inspection unit 304 determines, based on the result of the comparison, whether or not the result of the CRC computation and the reference CRC (for inspection) match each other. When it is determined that the CRC computation and the reference CRC (for inspection) match at the step S1405 (in the case of YES at the step S1405), the process proceeds to the step S1411.

At the step S1411, the removal unit 305 removes the watermark image after the warping processing from the static region of the image after the warping processing to return the static region of the image back after the warping processing to the state where the watermark image is not inserted.

At the step S1412, the image output unit 306 outputs the image after the removal, in which the watermark image after the warping processing is removed from the static region of the image after the warping processing, to the display 150.

When it is determined that the CRC computation and the reference CRC (for inspection) do not match at the step S1405 (in the case of NO at the step S1405), in contrast to the above, the process proceeds to the step S1421.

At the step S1421, the inspection unit 304 performs error processing. Moreover, at the step S1422, the image output unit 306 outputs the image after the error processing to the display 150.

At the step S1431, the display controller 140 determines whether or not an instruction to stop the display application has been acquired. When the display controller 140 determines that the instruction to stop the display application has not been acquired at the step S1431 (in the case of NO at the step S1431), the process proceeds to the step S1432.

At the step S1432, the reference CRC generating unit 1308 determines whether or not the type of the warp map has been changed. When it is determined that the type of the warp map has not been changed at the step S1432 (in the case of NO at the step S1432), the process is returned to the step S1403.

When it is determined that the type of the warp map has been changed at the step S1432 (in the case of YES at the step S1432), in contrast to the above, the process is returned to the step S1402.

Moreover, when it is determined that the instruction to stop has been acquired at the step S1431 (in the case of YES at the step S1431), the display engine 200 is stopped to end the display application for displaying an image on the display 150. Thus, the inspection processing is ended.

### <Conclusion>

As is clear from the above description, the display controller 140 according to the second embodiment:
inserts a watermark image, which is a determination image, into a static region of time-series images, where the static region is a region in which a pixel value does not change over time; when a type of a warp map is changed, executes warping processing on an image of the static region into which the watermark image prepared in advance is inserted, and performs a CRC computation on the image of the static region after the warping processing to generate a reference CRC;
executes warping processing on the image in which the watermark image is inserted into the static region; and
determines whether or not a result of the CRC computation performed on the static region of the image after the warping processing matches the generated reference CRC.

As described above, the second embodiment has the same configuration as the first embodiment, and is further configured to generate a reference CRC online.

Thus, the second embodiment achieves the same effects as the first embodiment, and can moreover omit processing in an offline phase.

### [Other embodiments]

The present invention is not limited to the configurations described in the above embodiments, such as combinations with other elements. These points can be changed without departing from the scope of the present invention, and can be appropriately determined according to applied embodiments thereof.

### Description of Symbols

10: generating device
100: display system
110: head unit
120: serializer
131: deserializer
140: display controller
150: display
200: display engine
201: capture circuit
202: memory
203: warping engine
204: inspection circuit
205: removal circuit
206: output circuit
221: memory
222: processor
301: image input unit
302: storage unit
303: warping unit
304: inspection unit
305: removal unit
306: image output unit
307: watermark image insertion unit
308: reference CRC storage unit
1100: display system
1308: reference CRC generating unit

## Claims

1. A display control device comprising:
an insertion unit configured to insert a determination image into a static region of time-series images, the static region being a region in which a pixel value does not change over time;
a processing unit configured to execute warping processing on an image into which the determination image is inserted; and
a determination unit configured to determine whether or not a result of a CRC computation performed on the static region of the image after the warping processing matches first reference information.

2. The display control device according to claim 1, wherein the time-series image includes an imaging region, the imaging region including a dynamic region, in which a pixel value changes over time, and the static region, in which the pixel value does not change over time, and
the insertion unit is configured to insert the determination image into the static region within the imaging region of the time-series image, not the dynamic region.

3. The display control device according to claim 2, wherein the static region is a black region disposed at a periphery of the dynamic region.

4. The display control device according to claim 2 or 3, further comprising:
a changing unit configured to, when the determination unit determines that the result of the CRC computation matches the first reference information, return the static region of the image after the warping processing to a state where the determination image is not inserted; and
an output unit configured to output the image after the warping processing, which has been returned to the state where the determination image is not inserted.

5. The display control device according to claim 4, wherein
the changing unit includes a removal unit configured to, when the determination unit determines that the result of the CRC computation matches the first reference information, remove the determination image after the warping processing from the static region of the image after the warping processing, and
the output unit is configured to output the image after the warping processing from which the determination image is removed.

6. The display control device according to claim 4, wherein
the static region is a black region disposed at a periphery of the dynamic region, and
the changing unit includes a black conversion unit configured to, when the determination unit determines that the result of the CRC computation does not match the first reference information, convert the static region of the image after the warping processing into black,
wherein, when the determination unit determines that the result of the CRC computation matches the first reference information,
the determination unit compares the result of the CRC computation to second reference information that is different from the first reference information, and determines that the result of the CRC computation does not match the second reference information,
the black conversion unit converts the static region of the image after the warping processing into black, by the determination unit determing that the result of the CRC computation does not match the second reference information, and
the output unit outputs the image after the warping processing, in which the static region is converted into black.

7. The display control device according to claim 2 or 3, further comprising
a black conversion unit configured to, when the determination unit determines that the result of the CRC computation does not match the first reference information, convert the static region of the image after the warping processing and at least part of the dynamic region of the image after the warping processing into black.

8. The display control device according to any one of claims 1 to 7, further comprising
a storage unit configured to store a variety of the first reference information corresponding to types of warp maps, the variety of the first reference information being different from one another according to the types of the warp maps,
wherein the determination unit is configured to determine using the first reference information corresponding to a type of a warp map used for the warping processing among the variety of the first reference information stored in the storage unit.

9. The display control device according to any one of claims 1 to 7, further comprising
a generating unit configured to generate the first reference information corresponding to a type of a warp map used for the warping processing,
wherein the determination unit is configured to determine using the first reference information generated by the generating unit.

10. The display control device according to claim 9,
wherein, when the type of the warp map used for the warping processing is changed, the generating unit generates the first reference information corresponding to the changed type of the warp map, and
the determination unit is configured to determine using the first reference information which is generated by the generating unit and corresponds to the changed type of the warp map.

11. A display control device comprising:
a display engine configured to execute warping processing and inspection processing on time-series images; and
a processor configured to control the warping processing and inspection processing,
wherein the display engine is configured to
insert a determination image into a static region of the time-series images, the static region being a region in which a pixel value does not change over time,
execute the warping processing on an image into which the determination image is inserted, and
as the inspection processing, determine whether or not a result of a CRC computation performed on the static region of the image after the warping processing matches first reference information.

12. The display control device according to claim 11, further comprising
a memory configured to store the first reference information used for the inspection processing.

13. A display system comprising:
the display control device according to any one of claims 1 to 12;
a head unit configured to generate an image to be processed by the display control device; and
a display device configured to display the image after the warping processing output from the display control device.

14. A display control method performed by a display control device, the display control device including an insertion unit, a processing unit and a determination unit, the display control method comprising:
inserting, by the insertion unit, a determination image into a static region of time-series images, the static region being a region in which a pixel value does not change over time;
executing, by the processing unit, warping processing on an image in which the determination image is inserted; and
determining, by the determination unit, whether or not a result of a CRC computation performed on the static region of an image after the warping processing with first reference region generated in advance.
